Europäisches Patentamt

**European Patent Office**

**Office européen des brevets**

(11) Numéro de publication: **0 244 324**
**B1**

(12) **FASCICULE DE BREVET EUROPÉEN**

(45) Date de publication du fascicule du brevet:
**12.07.89**

(21) Numéro de dépôt: **87400993.9**

(22) Date de dépôt: **29.04.87**

(51) Int. Cl.⁴: **G 01 L 1/22,** G 01 G 3/14

(54) Capteur de force à jauges résistives.

(30) Priorité: **30.04.86 FR 8606298**

(43) Date de publication de la demande:
**04.11.87 Bulletin 87/45**

(45) Mention de la délivrance du brevet:
**12.07.89 Bulletin 89/28**

(84) Etats contractants désignés:
**AT BE CH DE ES GB GR IT LI LU NL SE**

(56) Documents cité:
**EP-A-0 153 121**
**EP-A-0 175 912**
**WO-A-84/02186**
**US-A-3 116 469**

(73) Titulaire: **SFERNICE SOCIETE FRANCAISE DE L'ELECTRO- RESISTANCE, 59, rue Gutenberg, F-75737 Paris Cedex 15 (FR)**

(72) Inventeur: **Cherbuy, Jean, 35 Avenue Raymond Férand, F-06200 Nice (FR)**

(74) Mandataire: **Bouju, André, Cabinet Bouju 38 avenue de la Grande Armée, F-75017 Paris (FR)**

## Description

La présente invention concerne un capteur de force à jauges résistives dont le signal en l'absence de charge ("zéro") est insensible aux variations de temperature.

On connaît des capteurs du type précité, comprenant un barreau élastique en métal, dont l'une des extrémités est destinée à être fixée à un support fixe et l'autre soumise à la force à mesurer. Cette force est généralement appliquée sur un plateau parallèle au barreau et relié à l'extrémité de celui-ci qui est opposée au support fixe.

Le barreau fixe porte des jauges résistives reliées électriquement entre elles en formant un pont de mesure délivrant un signal électrique qui est fonction de la force appliquée sur le plateau précité.

Cette force, suivant son point d'application sur le plateau, engendre des couples de torsion et de flexion variables sur le barreau qui modifient la valeur du signal électrique délivré par le pont de mesure et faussent ainsi la mesure de cette force.

Il convient donc de rendre cette mesure insensible à l'égard des couples parasites précités, de façon que le signal délivré soit constant, quel que soit le point d'application de la force sur le plateau.

Deux méthodes sont actuellement utilisées pour assurer l'insensibilité de la mesure de la force à l'égard des couples parasites précités:

Dans une première méthode, le plateau repose sur un système de leviers sommant les forces appliquées sur le plateau et transmettant la force résultante sur un point déterminé au dispositif de mesure.

Dans une seconde méthode, le plateau est fixé directement à un capteur de forme souvent très complexe, étudié pour minimiser l'effet des couples ou moments parasites; le capteur est ajusté en général par des actions mécaniques pour éliminer les effets résiduels des moments parasites.

Dans le procédé décrit dans le brevet français n° 8 220 040, on a tenté de résoudre les difficultés précitées en éliminant le signal de torsion parasite engendré lors de l'application de la force sur le plateau, au moyen d'une ou de plusieurs jauges sensibles à la torsion et de résistances additionnelles convenables insérées dans le circuit de traitement du signal.

Cependant, ce procédé ne permet pas d'éliminer le signal parasite lié au déplacement du point d'application de la force dans une direction parallèle à l'axe du barreau élastique.

Dans la demande de brevet européen n° 86 400 601.0, numéro de publication 0 200 587 (Art. 54(3) CBE), on a décrit un procédé permettant d'ajuster le capteur de force de façon que le signal électrique de mesure soit insensible aux couples de torsion et de flexion engendrés par des déplacements du point d'application de la force à mesurer, sur le barreau portant les jauges.

Ce procédé comporte les étapes suivantes:

A. on détermine les caractéristiques initiales du capteur,

B. on calcule les erreurs relatives du capteur dues à un déplacement de la force appliquée en fonction de l'angle θ formé entre les jauges résistives et la direction longitudinale du barreau,

C. on annule ces erreurs, en-apportant à une ou plusieurs jauges résistives des modifications ayant pour effet de modifier l'angle θ précité.

La demanderesse a constaté en effet qu'il était possible de calculer les erreurs relatives du capteur, dues à des déplacements de la force appliquée en fonction de l'angle θ formé entre les jauges résistives et le barreau élastique.

De ce fait, il est possible d'annuler ces erreurs en apportant à une ou plusieurs jauges résistives, des modifications ayant pour effet de modifier l'angle précité.

Le procédé conforme à cette invention permet ainsi d'obtenir, en une seule séquence d'opérations, en agissant uniquement sur l'angle θ formé par une ou plusieurs jauges résistives, un capteur de force délivrant un signal rigoureusement proportionnel à la force à mesurer et ce, quel que soit le point d'application de celle-ci, relativement au barreau.

Etant donné que le procédé agit sur un seul paramètre des jauges résistives, ce procédé peut être aisément automatisable.

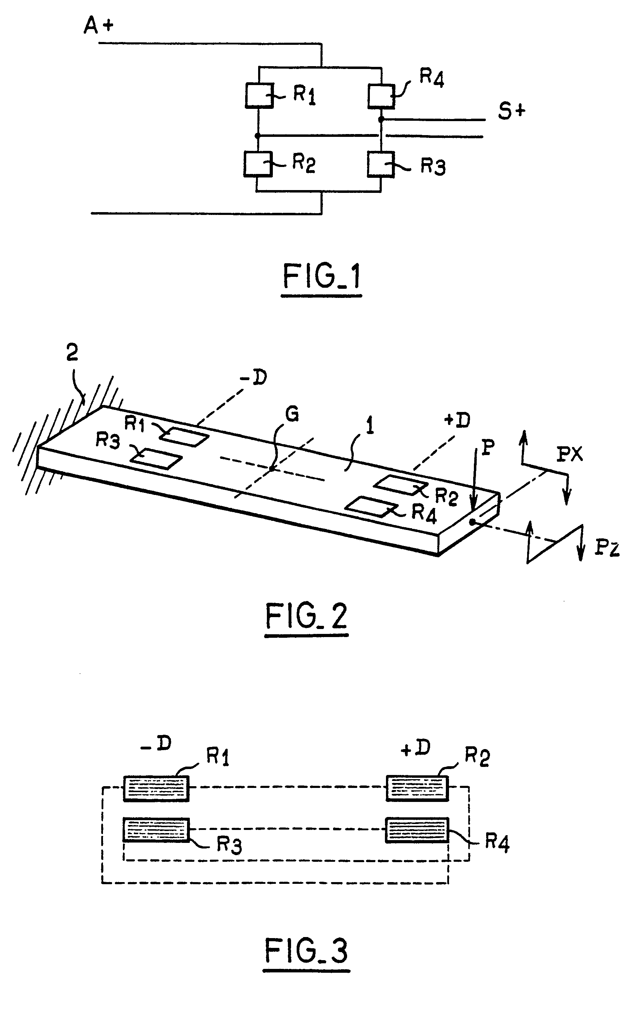

Dans les réalisations classiques, quatre jauges résistives $R_1 = R_2 = R_3 = R_4$ sont déposées sur une face d'un barreau métallique élastique et sont connectées ensemble électriquement suivant un pont de Wheatstone, comme indiqué sur la figure 1 annexée, sur laquelle l'alimentation est référencée par A+ et la sortie par S+.

Comme indiqué sur la figure 2, deux blocs formés respectivement par les jauges $R_1$, $R_3$ et les jauges $R_2$, $R_4$ sont placés à une abscisse -D et +D du centre de gravité G du barreau élastique 1. Dans chacun de ces deux blocs, les jauges $R_1$, $R_3$ ou $R_2$, $R_4$ sont de même parité (c'est-à-dire, non connexes sur le schéma du pont de Wheatstone comme indiqué sur la figure 3).

Lorsqu'on applique une force P à l'extrémité du barreau 1 opposée au corps fixe 2 auquel est fixé le barreau 1, le signal électrique engendré à la sortie S+ du pont de wheatstone est de la forme:

A P G D + z

dans laquelle:

EP 0 244 324 B1

$$A = \frac{1}{EI/v} \quad \text{ou} \quad \begin{array}{l} \text{E est le module d'élasticité du barreau,} \\ \text{I : son moment d'inertie et} \\ \text{v : la demi-épaisseur du barreau} \end{array}$$

G est une constante appelée "coefficient de jauge"

et z représente le signal (idéalement nul) dû au déséquilibre du pont de mesure en l'absence de force appliquée (signal désigné ultérieurement par zéro).

La variation du zéro est donnée par l'équation du pont de mesure:

$$dz = \frac{1}{4}(r_1 - r_2 + r_3 - r_4) \quad \text{où} \quad r_i = \frac{\Delta R_i}{R_i}$$

($R_i$ étant la résistance électrique de la jauge i)

et est essentiellement fonction de la température et de la durée.

On se limitera ultérieurement, par simplicité, à l'influence de la température, l'influence de la durée se traitant de façon analogue. Par conséquent, on admettra que dz désigne la dérive thermique du zéro.

Les dérives thermiques des résistances des jauges $R_1$, $R_2$, $R_3$, $R_4$ perturbent le signal et il est nécessaire d'annuler dz. Ceci se fait usuellement en insérant des résistances de valeur convenable, à grand coefficient de température, en série avec une jauge de parité convenable. Cette opération coûteuse est inacceptable pour réaliser un capteur de force économique.

Une méthode plus appropriée à la production de capteurs de force économiques cunsiste à sélectionner des blocs de jauges de comportement thermique quasi identiques. Cette sélection est cependant encore une contrainte économique. Elle n'est, de plus, pas parfaitement efficace, comme d'ailleurs la méthode précédente, s'il existe un gradient de température longitudinal.

Le but de la présente invention est précisément de créer un capteur de force à jauges résistives dont le signal de zéro est insensible aux variations de température au cours du temps et à l'existence d'un gradient thermique le long du barreau.

La présente invention vise un capteur de force à jauges résistives, ce capteur comprenant un barreau élastique dont l'une des extrémités est destinée à être fixée à un support fixe et l'autre soumise à la force à mesurer, ce barreau portant des jauges résistives reliées électriquement entre elles en formant un pont de mesure délivrant un signal électrique qui est fonction de la force appliquée sur ladite extrémité du barreau, ce capteur étant ajusté de telle sorte que le signal soit proportionnel à la force appliquée et insensible aux couples de torsion et de flexion engendrés par les déplacements du point d'application de la force à mesurer.

Suivant l'invention, ce capteur de force est caractérisé en ce que le barreau comprend deux blocs de jauges disposés symétriquement de part et d'autre du centre de gravité (G) du barreau, en ce que les jauges d'un même bloc sont de parités différentes et en ce que la longueur électrique d'une jauge est perpendiculaire à celle de la jauge voisine du même bloc.

La longueur électrique désigne la direction des lignes de courant d'une jauge.

Les dérives thermiques de deux jauges résistives d'un même bloc, sont toujours égales si:

a) Les coefficients de température de ces jauges sont égaux. Ces coefficients représentent les variations thermiques de la résistivité de l'alliage utilisé pour réaliser les jauges et les variations thermiques des dimensions de la jauge, elles-mêmes liées aux variations thermiques des dimensions du substrat sur lequel elles sont fixées.

b) Les variations de température $\Delta\theta$ de ces résistances sont égales.

Ces deux conditions sont réalisées au mieux si les deux jauges sont issues de la même petite quantité d'alliage résistant, restent contiguës pendant toutes les phases de leur fabrication et sont fixées simultanément sur la même petite région du barreau c'est-à-dire forment un petit bloc sur le barreau métallique du capteur de force.

D'autres particularités et avantages de l'invention apparaîtront encore dans la description ci-après.

Aux dessins annexés, donnés à titre d'exemples non limitatifs:

- la figure 1 montre schématiquement la disposition classique des jauges résistives suivant un pont de Wheatstone,
- la figure 2 est une vue schématique d'un capteur de force classique comportant un barreau élastique dont l'une des faces porte des jauges résistives,
- la figure 3 montre schématiquement comment les jauges de la figure 2 sont connectées électriquement les unes aux autres,
- la figure 4 montre la disposition des jauges selon une première version de l'invention,
- la figure 5 montre la disposition des jauges selon une seconde version de l'invention.
- la figure 6 montre la disposition des jauges dans une réalisation préférée de l'invention.

Les jauges résistives $R_1$, $R_2$, $R_3$, $R_4$ considérées par la présente invention, sont par exemple constituées par une mince feuille en alliage résistif tel que du nickel-chrome, dans lequel on a gravé par attaque chimique ou bombardement ionique, de minces filaments résistifs. Dans la configuration classique (voir figure 3) les

3

filaments résistifs des jauges $R_1$, $R_2$, $R_3$, $R_4$, sont tous orientés dans la même direction.

Lorsqu'on applique une force décentrée P sur le barreau élastique 1 (voir figure 2), ce dernier subit des couples de flexion PX et de torsion PZ.

Dans la configuration classique, évoquée précédemment et représentée par la figure 2, les jauges $R_1$ et $R_3$ forment un bloc à l'abscisse -D et $R_2$ et $R_4$ forment un autre bloc à l'abscisse +D.

On peut écrire les coefficients de température des jauges sous la forme suivante:

$$\alpha_1 \equiv \frac{\alpha_1 + \alpha_3}{2} + \frac{\alpha_1 - \alpha_3}{2} = \alpha_{13} + \delta_{13};$$

$$\alpha_3 \equiv \frac{\alpha_1 + \alpha_3}{2} - \frac{\alpha_1 - \alpha_3}{2} = \alpha_{13} - \delta_{13}$$

de même: $\alpha_2 \equiv \frac{\alpha_2 + \alpha_4}{2} + \frac{\alpha_2 - \alpha_4}{2} = \alpha_{24} + \delta_{24};$

$$\alpha_4 \equiv \frac{\alpha_2 + \alpha_4}{2} - \frac{\alpha_2 - \alpha_4}{2} = \alpha_{24} - \delta_{24}$$

et écrire également qu'à l'abscisse -D, la température est: $\theta_{13} = \theta + \Delta$

alors qu'à l'abscisse +D, la température est: $\theta_{24} = \theta - \Delta$

$\theta$ est la température moyenne du barreau 1 et $\Delta$ la demi-différence de température entre les abscisses -D et +D. On peut alors calculer la dérive thermique:

$$dz = \frac{1}{4}[(r_1 + r_3) - (r_2 + r_4)]$$

$$4\,dz = (\alpha_{13} + \delta_{13} + \alpha_{13} - \delta_{13})(\theta + \Delta) - (\alpha_{24} + \delta_{24} + \alpha_{24} - \delta_{24})(\theta - \Delta) = 2\alpha_{13}(\theta + \Delta) - 2\alpha_{24}(\theta\,\Delta)$$

par conséquent:

$$dz = \frac{1}{2}(\alpha_{13} - \alpha_{24})\theta + \frac{1}{2}(\alpha_{13} + \alpha_{24})\Delta$$

La dérive thermique dz de zéro dépend des CT (coefficients de température) moyens ($\alpha_{13}$ et $\alpha_{24}$) des blocs ($R_1$, $R_3$ et $R_2$, $R_4$).

Pour qu'un échauffement homogène ($\Delta = 0$) produise une dérive de zéro dz inférieure à $1.10^{-6}$, par exemple, sur une plage de température $\theta = 20°$C, il faut remplir la condition suivante:

$$\alpha_{13} - \alpha_{24} < 0{,}1\ 10^{-6}/°K,$$

ce qui rend nécessaires les précautions évoquées plus haut.

Même avec ces précautions, et en considérant que les coefficients de température sont de même signe, s'il existe un gradient de température le long du barreau 1, on obtient très facilement des dérives de zéro dz considerables.

La configuration de pont proposée selon la présente invention pour rendre minimales les dérives de zéro, regroupe dans le même bloc, deux jauges résistives ($R_1$, $R_2$; $R_3$, $R_4$) de parités différentes. Ainsi, les dérives thermiques sont substantiellement annulées à l'intérieur de chaque bloc. En effet, dans ce cas, les deux solutions suivantes existent:

$$4\,dz = (r_1 - r_2) + (r_3 - r_4) \simeq 0 + 0$$

$$\text{ou } 4\,dz = (r_1 - r_4) + (r_3 - r_2) \simeq 0 + 0$$

Plus précisément, avec les notations déjà employées pour la configuration classique décrite en référence à la figure 2:

$$4\,dz = (\alpha_{12} + \delta_{12} - \alpha_{12} + \delta_{12})(\theta + \Delta) + (\alpha_{34} + \delta_{34} + \alpha_{34} + \delta_{34})(\theta - \Delta)$$

donc: $dz = \frac{1}{2}(\delta_{12} + \delta_{34})\theta + \frac{1}{2}(\delta_{12} - \delta_{34})\Delta$

$$\text{ou } 4\,dz = (\alpha_{14} + \delta_{14} - \alpha_{14} + \delta_{14})(\theta + \Delta) + (\alpha_{32} + \delta_{32} - \alpha_{32} + \delta_{32})(\theta + \Delta)$$

soit: $dz = \frac{1}{2}(\delta_{14} + \delta_{32})\theta + \frac{1}{2}(\delta_{14} - \delta_{32})\Delta$

On constate que les dérives thermiques du zéro (dz) ne dépendent plus des CT (coefficients de température) moyens des blocs, mais seulement des écarts de CT "$2\delta$" à l'intérieur des blocs, les signes des $\delta$ étant aléatoires.

Pour des distances de l'ordre de quelques millimètres entre les deux jauges d'un bloc, cet écart est au plus

de l'ordre de 0,1 $10^{-6}$/°K, de sorte que $|\delta_{14}| + |\delta_{32}| \leqq 0,1.10^{-6}$ Si$\theta = 20$ comme dans l'exemple donné pour la configuration classique, on obtient une dérive thermique dz inférieure

à $\frac{1}{2}0,1.10^{-6}.20 = 1.10^{-6}$, sans précaution particulière.

S'il existe un gradient de température $\Delta$ entre les deux blocs de jauges, la dérive thermique dz reste inférieure à $0,05 \Delta 10^{-6}$

Les deux jauges $R_1$, $R_2$ : $R_3$, $R_4$ étant de parité différente dans chaque bloc, on rend le signal maximal à l'aide de mesures exposées dans le brevet européen 86 400 601 de la demanderesse.

Dans le brevet européen 86 400 601, la demanderesse à établi la variation de valeur d'une résistance faisant un angle $\theta$ avec la direction longitudinale du barreau 1 soumis à une force située à une distance X du centre de gravité G du barreau 1 le long de son axe longitudinal et à une distance Z perpendiculaire à cet axe.

Cette variation est:

$$\frac{\Delta R}{R} = r = AP [G(X - x) + (1 + \mu)(\cos2\theta - 1)(X - x) + BZ \sin2\theta]$$

$$r_i = AP [(G - (1 + \mu))(- x_i) + (1 + \mu)C_i(- x_i) + (G -(1 + \mu))X + (1 + \mu)C_iX + B S_iZ]$$

où: A et B sont des caractéristiques mécaniques du barreau 1

G est le coefficient de jauge
$C_i = \cos 2\theta_i$
$S_i = \sin 2\theta_i$
$x_i$ = abscisse de la résistance i

Le signal du pont de Wheatstone est (en négligeant les termes du second ordre):

$$\text{Signal} = \alpha(r_1 - r_2) + \beta(r_3 - r_4)$$

où $\alpha = \frac{a}{(1 + a)^2}$, $\beta = \frac{b}{(1 + b)^2}$, $a = \frac{R_1}{R_2}$, $b = \frac{R_4}{R_3}$

(en pratique $\alpha$ et $\beta$ sont très proches de $\frac{1}{4}$ lorsque toutes les résistances des jauges ont la même valeur).

1) Posons $x_1 = x_2 = -D$ et $x_3 = x_4 = D$

$$\text{Signal} = AP[0 + (1 + \mu)(\alpha(C_1 - C_2) - \beta(C_3 - C_4))D + 0 + (1 + \mu)(\alpha(C_1 - C_2) + \beta(C_3 - C_4))X$$

$$+ B(\alpha(S_1 - S_2) + \beta(S_3 - S_4))Z] + z$$

ce signal est maximal pour $C_1 = C_4 = 1$; $C_2 = C_3 = -1$

soit $\theta_1 = \theta_4 = 0$ et $\theta_2 = \theta_3 = \frac{\pi}{2}$,

par conséquent le signal est égal à: $AP [(1 + \mu)(\alpha + \beta)2 D + (1 + \mu)(\alpha - \beta)2X] + z$

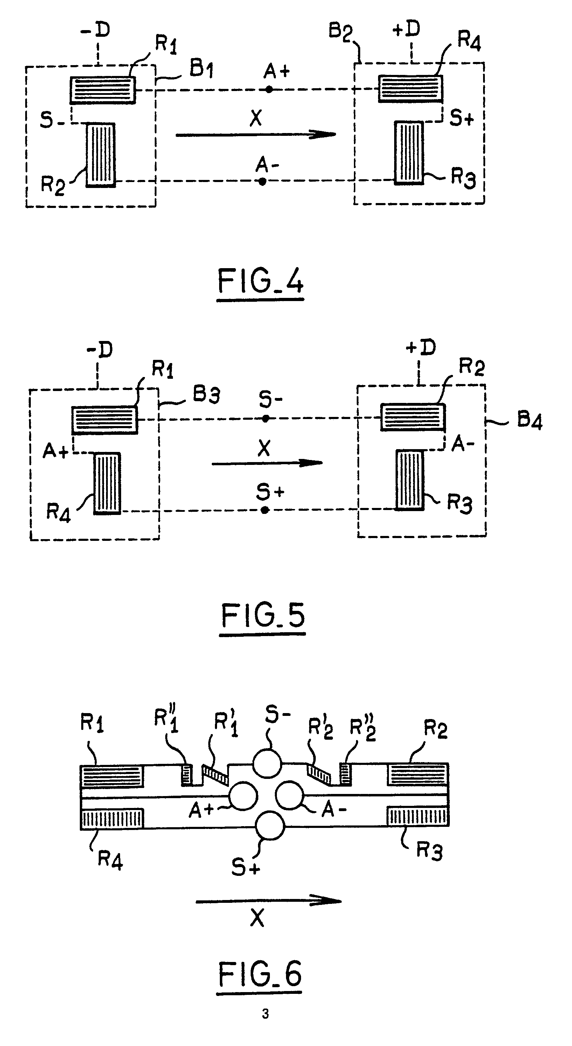

Cette disposition est représentée sur la figure 4. Les jauges $R_1$, $R_2$ de l'un des blocs ont des parités différentes, c'est-à-dire sont connexes sur le pont de Wheatstone.

De même, les jauges $R_3$ et $R_4$ sont de parités différentes. Les références A+ et A- désignent respectivement les bornes positives et négatives d'alimentation du pont de Wheatstone, tandis que S+ et S- désignent les bornes + et - de sortie. X désigne l'axe longitudinal du barreau 1.

On voit de plus, sur le schéma de la figure 4 que les filaments résistifs constituant les jauges $R_1$ et $R_4$ forment un angle $\theta = 0$ avec l'axe X, tandis que les filaments résistifs des jauges $R_2$ et $R_3$ forment un angle $\theta = \frac{\pi}{2}$ avec cet axe X.

2) Posons $x_1 = x_4 = -D$ et $x_2 = x_3 = D$

$$\text{Signal} = AP[(G - (1 + \mu)(\alpha - \beta))2D + (1 + \mu)(\alpha(C_1 + C_2) - \beta(C_3 + C_4))D$$

$$+ (1 + \mu)(\alpha(C_1 - C_2) + \beta(C_3 - C_4))X + B(\alpha(S_1 + S_2) + \beta(S_3 - S_4))Z] + z$$

Ce signal est maximal pour $C_1 = C_2 = 1$ et $C_3 = C_4 = -1$

soit $\theta_1 = \theta_2 = 0$; $\theta_3 = \theta_4 = -\pi_2$; par conséquent le signal est égal à:

$$AP [(G - (1 + \mu)(\alpha - \beta))2D + (1 + \mu)(\alpha + \beta)2D] + z$$

Cette disposition est représentée sur la figure 5.

Cette dernière configuration est préférée, car elle ne contient pas le terme en X ($\alpha$-$\beta$) présent dans la première configuration, qui complique en principe le réglage du capteur. On passe d'ailleurs de la configuration selon la figure 4 à la configuration selon la figure 5 en intervertissant simplement alimentations A+ et A- et sorties S+ et S- du pont de Wheatstone.

Si, conformément au brevet français 8 505 337, on dispose en série avec chacune des jauges $R_1$ et $R_2$ de deux blocs différents, comme indiqué sur la figure 6:

- une petite résistance ajustable $R'_1$ de poids

$\rho'1 = \frac{R'_1}{R_1 + R'_1}$ (et $R'_2$ de poids $\rho'2$), formant un angle $\theta - \frac{\pi}{4}$ par rapport à l'axe X du barreau 1,

- et une autre résistance ajustable $R''_1$ de poids $\rho''1$ (et $R''_2$ de poids $\rho''2$), formant un angle $\theta = \frac{\pi}{2}$ par rapport à l'axe X, les coefficients $C_1$ et $C_2$ de la relation précitée deviennent $1 - \rho'_1 - 2\rho''_1$ et $1 - \rho'_2 - 2\rho''_2$ au lieu de 1,

$S_1$ et $S_2$ deviennent $-\rho'_1$ et $-\rho'_2$ au lieu de 0
$C_3$ et $C_4$ restent égaux à -1 et $S_3$ et $S_4$ égaux à 0,
et on peut modifier à volonté les coefficients de Z et X dans l'expression du signal qui devient, en écrivant pour simplifier $\alpha = \beta = \frac{1}{4}$:

$$Signal = AP[(1 + \mu)D - \frac{1+\mu}{4}(\rho'_1 + \rho_2 + 2\rho''_1 + 2\rho''_2)D - \frac{1+\mu}{4}(\rho'_1 - \rho'_2 + 2\rho''_1 - 2\rho''_2)X - \frac{\beta}{4}(\rho'_1 - \rho'_2)Z] + z$$

On obtient ainsi un capteur de force insensible à la dérive thermique dz, mais dont le signal est également insensible aux couples de torsion et de flexion engendrés par les déplacements du point d'application sur le barreau 1 de la force P à mesurer.

A titre de comparaison, le signal du pont classique représenté sur les figures 2 et 3 muni des résistances de réglage sur $R_1$ et $R_2$ est égal à :

$$Signal = AP[GD - \frac{1+\mu}{4}(\rho'_1 + \rho'_2 + 2\rho''_1 + 2\rho''_2)D - \frac{1+\mu}{4}(\rho'_1 - \rho'_2 + 2\rho''_1 - 2\rho''_2)X - \frac{\beta}{4}(\rho'_1 - \rho'_2)Z] + z$$

On constate donc que la stabilité thermique automatique du zéro entraîne dans le cas de l'invention une réduction du signal dans le rapport:

$\frac{1+\mu}{6} : \frac{1,3}{2} = 0,65$, ce qui est négligeable.

La procédure de réglage est identique dans les deux cas ci-dessus.

Il est de plus important de noter que la configuration représentée sur la figure 5 est une boucle permettant l'intégration facile de toutes les connexions entre les jauges résistives du pont, comme indiqué sur la figure 6.

Bien entendu, l'invention n'est pas limitée aux exemples que l'on vient de décrire et on peut apporter à ceux-ci de nombreuses modifications sans sortir du cadre de l'invention comme revendiquée.

Ainsi, les jauges résistives telles que $R_1$ et $R_2$, au lieu d'être placées l'une à côté de l'autre perpendiculairement à l'axe longitudinal X du barreau 1, pourraient être placées l'une à côté de l'autre suivant cet axe X, à condition que la symétrie par rapport au centre de gravité G du barreau soit respectée pour les jauges résistives de l'autre bloc.

Bien entendu, l'ajustage du capteur de force pour le rendre insensible aux couples de torsion et de flexion engendrés par les déplacements du point d'application de la force P sur le barreau 1, pourrait être effectué par tout autre moyen que les résistances additionnelles telles que $R_1'$, $R_1''$ et $R_2'$ et $R_2''$ (voir figure 6) comme décrit dans le brevet européen 86 400 601 de la demanderesse.

Les jauges résistives, décrites comme formées de filaments gravés, peuvent être des résistances à couche; le mot "filament" est alors à comprendre comme "longueur électrique de la résistance".

## Revendications

1. Capteur de force à jauges résistives ($R_1$... $R_4$), ce capteur comprenant un barreau élastique (1) dont l'une des extrémités est destinée à être fixée à un support fixe (2) et l'autre soumise à la force (P) à mesurer, ce barreau (1) portant des jauges résistives ($R_1$, ...$R_4$) reliées électriquement entre elles en formant un pont de mesure délivrant un signal électrique qui est fonction de la force (P) appliquée sur ladite extrémité du barreau, ce capteur étant ajusté de telle sorte que le signal soit proportionnel à la force (P) appliquée et insensible aux couples de torsion et de flexion engendrés par les déplacements du point d'application de la force à mesurer, caractérisé en ce que le barreau comprend deux blocs ($B_1$, $B_2$; $B_3$, $B_4$) de jauges ($R_1$, $R_2$; $R_3$, $R_4$ ou $R_1$, $R_4$.; $R_2$, $R_3$) disposés symétriquement de part et d'autre du centre de gravité (G) du barreau (1) et suivant la direction de la longueur de celui-ci, en ce que les jauges d'un même bloc sont de parités différentes et en ce que la longueur électrique d'une jauge est perpendiculaire à celle de la jauge voisine du même bloc.

2. Capteur de force conforme à la revendication 1, caractérisé en ce que les jauges résistives d'un même bloc ($B_1$, $B_2$; $B_3$, $B_4$) proviennent du même alliage résistif, sont restées contigües pendant toutes les phases de leur fabrication et sont fixées simultanément sur le barreau 1.

3. Capteur de force conforme à l'une des revendications 1 ou 2, caractérisé en ce que les jauges résistives ($R_1$, $R_2$) de deux blocs différents sont chacune reliées en série avec une résistance ajustable ($R'_1$, $R'_2$) formant un angle égal à $\frac{\pi}{4}$ par rapport à l'axe longitudinal (X) du barreau (1) et avec une résistance ajustable ($R''_1$, $R''_2$) formant un angle égal à $\frac{\pi}{2}$ par rapport à l'axe (X).

## Patentansprüche

1. Kraftwandler mit Widerstandsmeßstreifen ($R_1$, ...$R_4$), wobei dieser Kraftwandler einen elastischen Stab (1) aufweist, wovon eines der Enden dazu bestimmt ist, an einem festen Träger (2) befestigt zu werden, und wovon das andere Ende der zu messenden Kraft (P) unterworfen ist, wobei dieser Stab (1) Widerstandsmeß-streifen ($R_1$, ...$R_4$) trägt, die miteinander elektrisch verbunden sind und die eine Meßbrücke bilden, die ein elektrisches Signal abgibt, das von der auf das obengenannte Stabesende aufgebrachten Kraft (P) abhängig ist, wobei dieser Kraftwandler derart eingestellt ist, daß das Signal der auf gebrachten Kraft (P) proportional ist und für die von den Verlagerungen des Ängriffspunktes der zu messenden Kraft erzeugten Torsions-und Biegemomente unempfindlich ist, dadurch gekennzeichnet, daß der Stab zwei Blöcke ($B_1$, $B_2$; $B_3$, $B_4$) von Meßstreifen ($R_1$, $R_2$; $R_3$, $R_4$ oder $R_1$, $R_4$; $R_2$, $R_3$) umfaßt, die beiderseits des Schwerpunktes (G) des Stabes (1) symmetrisch und in Längsrichtung desselben angeordnet sind, daß die Meßstreifen eines selben Blocks verschiedene Paritäten aufweisen und daß die elektrische Länge eines Meßstreifens zu derjenigen des benachbarten Meßstreifens eines selben Blocks senkrecht ist.

2. Kraftwandler nach Anspruch 1, dadurch gekennzeichnet, daß die Widerstandsmeßstreifen eines selben Blocks ($B_1$, $B_2$; $B_3$, $B_4$) aus derselben Widerstandslegierung stammen, während aller Phasen ihrer Herstellung benachbart geblieben sind und gleichzeitig auf dem Stab 1 befestigt werden.

3. Kraftwandler nach einem der Ansprüche 1 oder 2, dadurch gekennzeichnet, daß jeder der Widerstandsmeß-streifen ($R_1$, $R_2$) zweier verschiedener Blöcke mit einem einstellbaren Widerstand ($R'_1$, $R'_2$) in Reihe verbunden ist, wobei dieser Widerstand einen Winkel von $\frac{\pi}{4}$ mit der Längsachse (X) des Stabes (1) bildet und mit einem einstellbaren Widerstand ($R''_1$, $R''_2$), der einen Winkel von $\frac{\pi}{2}$ mit der Achse (X) bildet, in Reihe verbunden ist.

## Claims

1. A resistance-gauge force transducer, this transducer comprising a resilient bar (1) having one end intended to be fixed to a stationary support (2) and the other end subjected to the force (P) to be measured, this bar (1) carrying resistance gauges ($R_1$, ...$R_4$) electrically interconnected so as to form a measuring bridge delivering an electrical signal which is a function of the force (P) applied on the said end of the bar, this transducer being adjusted such that the signal is proportional to the force (P) applied and insensitive to torsional and flexural couples created by displacements of the point of application of the force to be measured, characterized in that the bar comprises two groups ($B_1$, $B_2$; $B_3$, $B_4$) of gauges ($R_1$, $R_2$; $R_3$, $R_4$ or $R_1$, $R_4$; $R_2$, $R_3$) symmetrically disposed on both sides of the center of gravity (G) of the bar (1) and along the direction of the length of said bar (1), in that the gauges of a same group have opposite parities and in that the electrical length of a gauge is perpendicular to that of the adjacent gauge of the same group.

2. A force transducer according to claim 1, characterized in that the resistance gauges of a same group ($B_1$, $B_2$; $B_3$, $B_4$) are formed from the same resistant alloy, remain contiguous during all stages of their manufacture and are simultaneously fixed on the bar 1.

3. A force transducer according to claim 1 or claim 2, characterized in that the resistance gauges ($R_1$, $R_2$) of two different groups are each connected in series with an adjustable resistance ($R'_1$, $R'_2$) forming an angle equal to $\frac{\pi}{4}$ with respect to the longitudinal axis (X) of the bar (1) and with an adjustable resistance ($R''_1$, $R''_2$) forming an angle equal to $\frac{\pi}{2}$ with respect to the axis (X).

FIG_1

FIG_2

FIG_3

$\underline{FIG.4}$

$\underline{FIG.5}$

$\underline{FIG.6}$